# EUROPEAN PATENT APPLICATION

(11) **EP 4 789 901 A1**
(43) Date of publication of application: **12.08.2026**
(21) Application number: 25224169.0
(22) Date of filing: 17.12.2025
(51) Int. Cl.: B60L 15/00, B60L 53/20

(54) **SYSTEMS AND METHODS FOR POWER CONVERTER FOR EXTERNALLY EXCITED SYNCHRONOUS MACHINE**

(30) Priority: 05.02.2025 US 202519046156
(71) Applicant: Borgwarner Inc., Auburn Hills, Michigan 48326 (US)
(72) Inventor: AVHAD, Shubham, Nashik (IN); RANGINEEDI, Tej Kiran, Narsapur (IN); RAGHAV, Ashish, Bhondsi (IN); RAVICHANDRAN, Sriram, Bengaluru (IN)
(74) Representative: Office Freylinger

(57) **Abstract**

A system for a power converter includes a rectifier, a capacitor connected to the rectifier, a direct current to alternating current inverter (DC-AC inverter) connected to the capacitor, and a switch to operate in a first position to connect a motor to an AC side of the DC-AC inverter and disconnect the motor from an AC side of the rectifier, and a second position to connect the motor to the AC side of the rectifier and disconnect the motor from the AC side of the DC-AC inverter.

## Description

### TECHNICAL FIELD

Various embodiments of the present disclosure relate generally to systems and methods for a power converter, and, more particularly, to systems and methods for a power converter for an externally excited synchronous machine for full electric or hybrid electric vehicles.

### BACKGROUND

Electrified vehicles, for example, may include a power converter including a charger to charge a battery of the vehicle. The charger may include a dedicated Power Factor Correction (PFC) circuit to correct a power factor of an input grid. The PFC may require additional components, which may increase a weight and cost of the power converter.

The present disclosure is directed to overcoming one or more of these above-referenced challenges.

### SUMMARY OF THE DISCLOSURE

In some aspects, the techniques described herein relate to a system for a power converter, the system including: a rectifier; a capacitor connected to the rectifier; a direct current to alternating current inverter (DC-AC inverter) connected to the capacitor; and a switch to operate in a first position to connect a motor to an AC side of the DC-AC inverter and disconnect the motor from an AC side of the rectifier, and a second position to connect the motor to the AC side of the rectifier and disconnect the motor from the AC side of the DC-AC inverter.

In some aspects, the techniques described herein relate to a system, wherein the rectifier is a diode rectifier.

In some aspects, the techniques described herein relate to a system, further including: a battery connected to a DC side of the DC-AC inverter.

In some aspects, the techniques described herein relate to a system, further including: the motor, wherein the motor is an externally excited synchronous machine.

In some aspects, the techniques described herein relate to a system, further including: a direct current to direct current converter (DC-DC converter) connected to the motor and a DC side of the DC-AC inverter.

In some aspects, the techniques described herein relate to a system, wherein the DC-DC converter includes a capacitor connected to the DC side of the DC-AC inverter.

In some aspects, the techniques described herein relate to a system, further including: a clutch to connect and disconnect the motor to and from a transmission, or a transmission with a neutral gear to connect and disconnect the motor to and from one or more wheels.

In some aspects, the techniques described herein relate to a system, further including: a choke connected to the AC side of the rectifier, wherein in the second position, the switch is connected to the choke.

In some aspects, the techniques described herein relate to a system, further including: an AC filter connected to the choke.

In some aspects, the techniques described herein relate to a system, further including: an alternating current to direct current (AC-DC) rectifier.

In some aspects, the techniques described herein relate to a system, wherein the DC-AC inverter is a three-phase inverter.

In some aspects, the techniques described herein relate to a system, further including: a battery connected to a DC side of the DC-AC inverter, and the motor configured to rotate based on power received from the battery, wherein the system is provided as a vehicle.

In some aspects, the techniques described herein relate to a system, wherein the switch is a three-phase switch.

In some aspects, the techniques described herein relate to an electrified vehicle including: a motor; a battery; and a power converter including: a rectifier; a capacitor connected to the rectifier; a direct current to alternating current inverter (DC-AC inverter) connected to the capacitor; and a switch to operate in a first position to connect the motor to an AC side of the DC-AC inverter and disconnect the motor from an AC side of the rectifier, and a second position to connect the motor to the AC side of the rectifier and disconnect the motor from the AC side of the DC-AC inverter.

In some aspects, the techniques described herein relate to an electrified vehicle, further including: a transmission connected to one or more wheels.

In some aspects, the techniques described herein relate to an electrified vehicle, further including: a clutch configured to connect and disconnect the motor to and from the transmission.

In some aspects, the techniques described herein relate to an electrified vehicle, further including: a direct current to direct current (DC-DC) converter connected to the motor and a DC side of the DC-AC inverter.

In some aspects, the techniques described herein relate to a system including: a battery; a motor including an inductive element; and a power converter to operate the motor using the battery, and to charge the battery using the inductive element of the motor.

In some aspects, the techniques described herein relate to a system, wherein the system further includes a switch to operate in a first position for the power converter to operate the motor and a second position for the power converter to charge the battery.

In some aspects, the techniques described herein relate to a system, wherein the power converter includes a diode rectifier.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a vehicle including a power converter, according to one or more embodiments.
FIG. 2 depicts an exemplary system including a power converter, according to one or more embodiments.
FIG. 3 depicts an exemplary system infrastructure for a controller, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. For example, in the context of the disclosure, the switching devices may be described as switches or devices, but may refer to any device for controlling the flow of power in an electrical circuit. For example, switches may be metal-oxide-semiconductor field-effect transistors (MOSFETs), bipolar junction transistors (BJTs), insulated-gate bipolar transistors (IGBTs), or relays, for example, or any combination thereof, but are not limited thereto.

Various embodiments of the present disclosure relate generally to systems and methods for a power converter, and, more particularly, to systems and methods for a power converter for an externally excited synchronous machine for an electrified vehicle.

A power converter, such as a battery charger, for example, according to the disclosure may operate with multiple types of alternating current (AC) input power supplies, including single phase, split/dual/two phase, and three-phase power supplies. The charger may be compatible with a wide range of configurations.

A power converter according to the disclosure may operate as a battery charger only, or operate bidirectionally for a charging operation or a power supply operation. The converter may either receive power from an AC power source and provide DC power to a battery, or receive power from the battery and provide power as an AC power source. A vehicle to grid (V2G) or vehicle to load (V2L, V2X) configuration may be achieved with a designed control strategy for single-phase, two-phase, and three-phase systems. Switches of the battery charger may be any devices, such as GTO, thyristors, or MOSFETs/ IGBTs with series diodes, for example. These switches may also be mechanical components (such as relays or contactors) if sufficient failure rates and arcing conditions during operation are met. Additionally, if the switches are semi-permanent in position, the switches may be implemented as one or more jumper connectors or dual in-line package (DIP) switches.

Electric vehicles, energy storage systems, and backup generators, for example, convert electric power from one form to another. Additionally, an on-board charger for a vehicle, for example, may have a dual purpose. The on-board charger may be a bi-directional system that converts AC voltage to DC voltage in a charging mode (grid-to-battery) and DC voltage to AC voltage in a discharge or inverter mode (battery-to-grid). The charging mode may convert the grid AC into DC voltage to charge the vehicle high voltage (HV) battery, and the discharge or inverter mode may convert the HV battery DC voltage into AC voltage that may be supplied to a load of the grid line voltage, be supplied as a backup generator to power a house when the grid is down, or as an inverter to supply voltage to vehicle AC outlets, for example. The on-board charger may have an isolated converter to meet automotive requirements.

An onboard charger may include a converter to convert a high voltage (HV) to a low voltage (LV), or a high voltage (HV) to a medium voltage (MV) and followed by a medium voltage (MV) to a low voltage (LV), for use by auxiliary circuits in an electric vehicle or plug-in hybrid electric vehicle, for example. A high voltage may be 400V or 800V, for example. A low voltage may be 12V or 48V, for example. An onboard charger may operate in different modes, such as pre-charging a bulk capacitor, for example. The disclosure refers to a high voltage and a low voltage, where the high voltage is a greater voltage than the low voltage. However, the disclosure is not limited thereto. For example, the high voltage may be a first voltage, and the low voltage may be a second voltage, where the first voltage may be less than, greater than, or equal to the second voltage.

Electrified vehicles, for example, may include a power converter including a charger to charge a battery of the electrified vehicle. The charger may include a dedicated Power Factor Converter (PFC) to correct a power factor of an input grid. The PFC may require additional components, which may increase a weight and cost of the power converter. One or more embodiments may provide a realization of the PFC functionality by leveraging the over-excitation mode of an Externally Excited Synchronous Machine (EESM), which may eliminate the need for a dedicated PFC circuit. One or more embodiments may provide a reduction in the number of components and derive secondary benefits in both nonfunctional and functional requirements of an on-board charger (OBC) system.

For a case of medium to high power vehicle propulsion applications which employ an EESM, some designs may assume a need for a dedicated PFC circuit. One or more embodiments described herein may eliminate a need for a dedicated PFC. One or more embodiments may use an EESM to reduce or eliminate secondary and multidisciplinary challenges (e.g., cost, mass, packaging, EMI, thermal issues) arising from the use of a dedicated PFC.

Some power systems and power electronics to power systems applications deploy reactive power compensators to improve power factor and enable grid compliance. One or more embodiments may provide a methodology that can be used in a 5-in-1 system when an EESM is employed in automotive applications. One or more embodiments may provide a system that uses an EESM for power-factor correction, which may eliminate the need for a special converter to carry out this task. Eliminating the PFC may lead to a cost effective, volume effective, and efficient module. One or more embodiments may provide a system that may be an improvement over some power systems that use a PFC.

One or more embodiments may replace an active front end (i.e., grid/line source or load) converter with a diode rectifier. One or more embodiments may provide a flexible or configurable switch at the motor stator terminals to connect or disconnect an inverter, based on the mode of operation. One or more embodiments may provide, for example, a driving mode where the inverter drives a motor, and a charging mode where a motor is working as a power factor corrector connecting grid terminals.

One or more embodiments may excite the field circuit of an EESM by deploying a DC-DC converter or use the onboard inverter for the same without using an additional DC-DC converter. One or more embodiments may provide a disconnect clutch at an interface between a motor output shaft and a gear box input shaft, or may use a gearbox with a neutral gear or state that can be engaged. One or more embodiments may use a motor not only for active discharge, but also for reactive power compensation during a charging application.

One or more embodiments may reduce a volume of a power converter package, which may include replacing a three phase totem pole converter and associated gate driver circuits with a simple diode rectifier. One or more embodiments may reduce a cost of a power converter by using diodes which may be less expensive than SiC transistors. One or more embodiments may provide reduced electro-magnetic interference by eliminating the PFC, which may reduce filter circuit design iterations. One or more embodiments may provide increased power density.

One or more embodiments may replace an active front end converter with a simple diode rectifier. One or more embodiments may eliminate a gate drive circuit with multiple switches, which may increase power density and reduce cost. One or more embodiments may provide a first mode as a motor drive application (which may be a lagging power factor region) and as second mode as a charging application (which may be a leading power factor region).

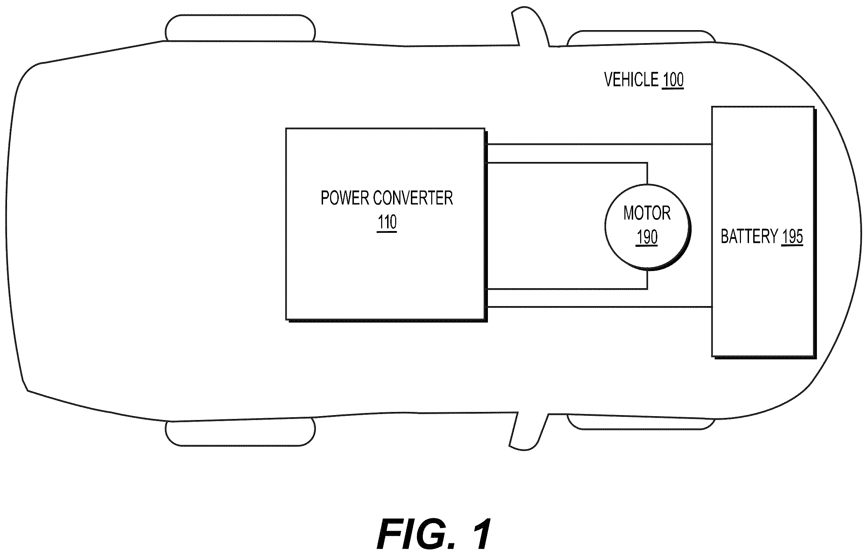

FIG. 1 depicts an exemplary system infrastructure for a vehicle including a power converter, according to one or more embodiments. The power converter 110 may be a combined inverter and converter. Electrified vehicle 100 may include power converter 110, motor 190, and battery 195. Power converter 110 may include components to receive electrical power from an external source and output electrical power to charge battery 195 of electrified vehicle 100. Power converter 110 may convert DC power from battery 195 in electrified vehicle 100 to AC power, to drive motor 190 of the electrified vehicle 100, for example, but the embodiments are not limited thereto. For example, power converter 110 may include components to receive electrical power from an external source and output electrical power to charge battery 195 without motor 190 connected to power converter 110. Power converter 110 may convert DC power from battery 195 in electrified vehicle 100 to AC power, to drive AC components other than motor 190 of the electrified vehicle 100. Power converter 110 may be bidirectional, and may convert DC power to AC power, or convert AC power to DC power, such as during regenerative braking, for example. Power converter 110 may be a three-phase inverter, a single-phase inverter, or a multi-phase inverter.

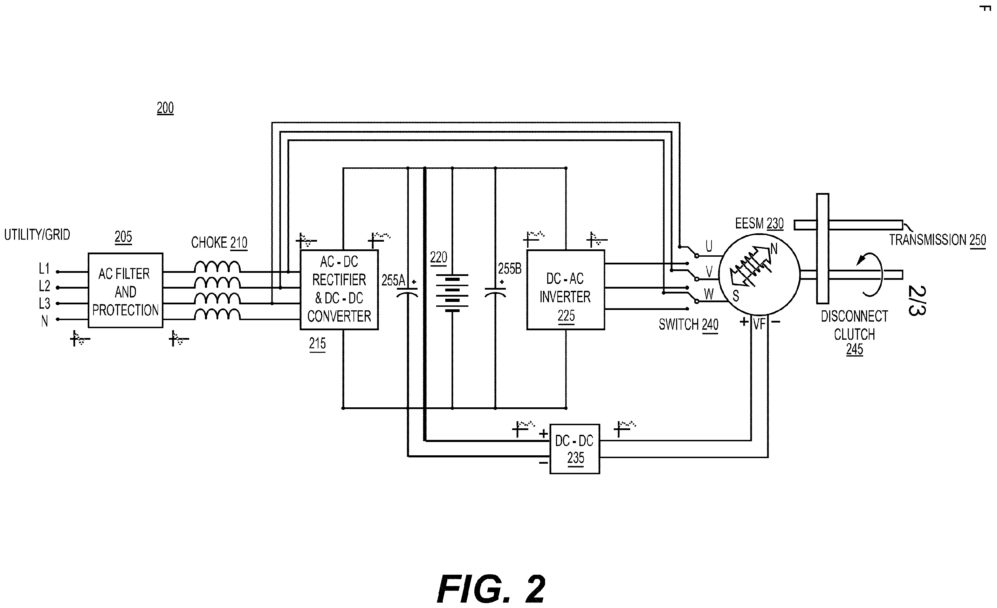

FIG. 2 depicts an exemplary system including a power converter, according to one or more embodiments. As depicted in FIG. 2, system 200 may include filter 205, choke 210, rectifier 215, capacitor 255A, battery 220, capacitor 255B, DC-AC inverter 225, DC-DC converter 235, configurable switch 240, EESM 230, disconnect clutch 245, and transmission 250. EESM may correspond to motor 190, battery 220 may correspond to battery 195, and other components of system 200 may correspond to power converter 110.

Filter 205 may be connected to a grid or line voltage source, such as a three-phase input with a neutral phase connection, for example. Choke 210 may be connected to filter 205. Rectifier 215 may include an AC-DC rectifier and a DC-DC converter. Rectifier 215 may be a diode rectifier. Capacitor 255A, battery 220, capacitor 255B, and DC-AC inverter 225 may be connected in parallel with rectifier 215, on a high voltage bus, for example. Battery 220 may be a high voltage battery, for example. DC-DC converter may be connected in parallel with capacitor 255A, and connected to EESM 230. EESM 230 may include one or more inductive elements. System 200 may use the one or more inductive elements of EESM 230 rather than a PFC.

Configurable switch 240 may operate in a first position to connect EESM 230 to an AC side of DC-AC inverter 225. Configurable switch 240 may operate in a second position to connect EESM 230 to the AC side of rectifier 215 (at choke 210) and disconnect EESM 230 from the AC side of DC-AC inverter 225. EESM 230 may be connected to disconnect clutch 245. Disconnect clutch 245 may be connected to transmission 250. Transmission 250 may be connected to one or more wheels, for example. Disconnect clutch 245 may connect and disconnect EESM 230 to and from transmission 250. System 200 may omit disconnect clutch 245, and use engagement of a neutral gear of transmission 250, so that power from EESM 230 is not transferred to the one or more wheels. EESM 230 may be configured to rotate based on power received from battery 220 via DC-AC inverter 225. Controller 300 may control an operation of one or more of rectifier 215, DC-AC inverter 225, DC-DC converter 235, configurable switch 240, or disconnect clutch 245.

For example, in a charging mode, controller 300 may control EESM 230 to operate until synchronous speed using DC-AC inverter 225 at the frequency of supply voltage followed by the changeover from inverter to the grid (PCC). Controller 300 may measure the power factor, and based on this measurement, may determine an excitation current. Controller 300 may use this excitation current to control a field of the EESM 230 (e.g., using DC-DC converter 235). EESM 230 then may provide reactive power, which may compensate for the power factor. For a driving mode, disconnect clutch 245 may be engaged and a contactor may connect to DC-AC inverter 225, and power may transfer from an energy storage source (for example, battery 220) to one or more wheels to drive the electrified vehicle 100.

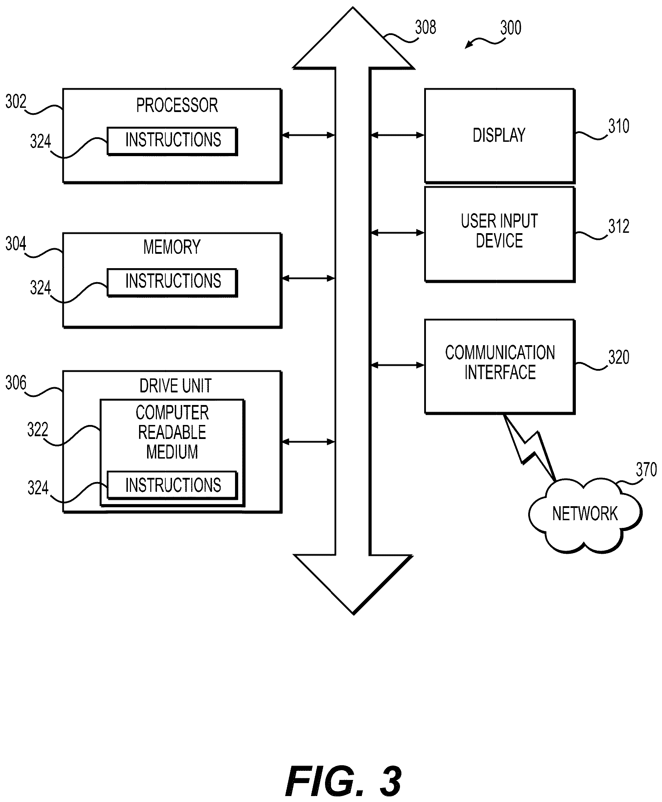

FIG. 3 depicts an exemplary system infrastructure for a controller, according to one or more embodiments. Controller 300 may include one or more controllers.

The controller 300 may include a set of instructions that can be executed to cause the controller 300 to perform any one or more of the methods or computer based functions disclosed herein. The controller 300 may operate as a standalone device or may be connected, e.g., using a network, to other computer systems or peripheral devices.

In a networked deployment, the controller 300 may operate in the capacity of a server or as a client in a server-client user network environment, or as a peer computer system in a peer-to-peer (or distributed) network environment. The controller 300 can also be implemented as or incorporated into various devices, such as a power converter, a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 300 can be implemented using electronic devices that provide voice, video, or data communication. Further, while the controller 300 is illustrated as a single system, the term "system" shall also be taken to include any collection of systems or sub-systems that individually or jointly execute a set, or multiple sets, of instructions to perform one or more computer functions.

As depicted in FIG. 3, the controller 300 may include a processor 302, e.g., a central processing unit (CPU), a graphics processing unit (GPU), or both. The processor 302 may be a component in a variety of systems. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As depicted, the controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the controller 300 may include an input device 312 configured to allow a user to interact with any of the components of controller 300. The input device 312 may be a number pad, a keyboard, or a cursor control device, such as a mouse, or a joystick, touch screen display, remote control, or any other device operative to interact with the controller 300.

The controller 300 may also or alternatively include drive unit 306 implemented as a disk or optical drive. The drive unit 306 may include a computer-readable medium 322 in which one or more sets of instructions 324, e.g. software, can be embedded. Further, the instructions 324 may embody one or more of the methods or logic as described herein. The instructions 324 may reside completely or partially within the memory 304 and/or within the processor 302 during execution by the controller 300. The memory 304 and the processor 302 also may include computer-readable media as discussed above.

In some systems, a computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in controller 300, or combinations thereof. The connection with the network 370 may be a physical connection, such as a wired Ethernet connection or may be established wirelessly as discussed below. Likewise, the additional connections with other components of the controller 300 may be physical connections or may be established wirelessly. The network 370 may alternatively be directly connected to a bus 308.

While the computer-readable medium 322 is depicted to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component or object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the operations of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

One or more embodiments may use a motor not only for active discharge, but also for reactive power compensation during a charging application. One or more embodiments may reduce a volume of a power converter package, which may include replacing a three phase totem pole converter and associated gate driver circuits with a simple diode rectifier. One or more embodiments may reduce a cost of a power converter, by using diodes which may be less expensive than SiC transistors. One or more embodiments may provide reduced electro-magnetic interference by eliminating the PFC, which may reduce filter circuit design iterations. One or more embodiments may provide increased power density.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A system for a power converter, the system comprising:
a rectifier;
a capacitor connected to the rectifier;
a direct current to alternating current inverter (DC-AC inverter) connected to the capacitor; and
a switch to operate in a first position to connect a motor to an AC side of the DC-AC inverter and disconnect the motor from an AC side of the rectifier, and a second position to connect the motor to the AC side of the rectifier and disconnect the motor from the AC side of the DC-AC inverter.

2. The system of claim 1, wherein the rectifier is a diode rectifier.

3. The system of any one of claims 1 to 2, further comprising:
a battery connected to a DC side of the DC-AC inverter.

4. The system of claim any one of claims 1 to 3, further comprising:
the motor, wherein the motor is an externally excited synchronous machine.

5. The system of claim 4, further comprising:
a direct current to direct current converter (DC-DC converter) connected to the motor and a DC side of the DC-AC inverter;
and wherein the DC-DC converter preferably includes a capacitor connected to the DC side of the DC-AC inverter.

6. The system of claim 4, further comprising:
a clutch to connect and disconnect the motor to and from a transmission, or
a transmission with a neutral gear to connect and disconnect the motor to and from one or more wheels.

7. The system of any one of claims 1 to 6, further comprising:
a choke connected to the AC side of the rectifier, wherein in the second position, the switch is connected to the choke;
and, preferably, further comprising an AC filter connected to the choke.

8. The system of any one of claims 1 to 7, further comprising:
an alternating current to direct current (AC-DC) rectifier.

9. The system of any one of claims 1 to 8, wherein the DC-AC inverter is a three-phase inverter.

10. The system of any one of claims 1 to 8, further comprising:
a battery connected to a DC side of the DC-AC inverter, and
the motor configured to rotate based on power received from the battery,
wherein the system is provided as a vehicle.

11. The system of any one of claims 1 to 10, wherein the switch is a three-phase switch.

12. An electrified vehicle comprising:
a motor;
a battery; and
a system for a power converter according to any of the preceding claims.

13. A system comprising:
a battery;
a motor including an inductive element; and
a power converter to operate the motor using the battery, and to charge the battery using the inductive element of the motor.

14. The system of claim 13, wherein the system further includes a switch to operate in a first position for the power converter to operate the motor and a second position for the power converter to charge the battery.

15. The system of claim 13 or 14, wherein the power converter includes a diode rectifier.
